# EUROPEAN PATENT SPECIFICATION

(11) **EP 2 608 650 B1**
(45) Date of publication and mention of the grant of the patent: **08.04.2015**
(21) Application number: 11752357.1
(22) Date of filing: 23.08.2011
(51) Int. Cl.: A01C 23/00

(54) **METHOD AND APPARATUS FOR DISTRIBUTED DISCHARGE OF A MEDIUM DISPLACEABLE BY A PUMP**
VERFAHREN UND VORRICHTUNG FÜR VERTEILTE ENTLADUNG EINES ANHAND EINER PUMPE VERDRÄNGBAREN MEDIUMS
PROCÉDÉ ET APPAREIL POUR UN REFOULEMENT DISTRIBUÉ D'UN MILIEU DÉPLAÇABLE PAR UNE POMPE

(30) Priority: 23.08.2010 NL 1038193
(43) Date of publication of application: 03.07.2013
(73) Proprietor: AGRO-INVENT B.V., 8308 RT Nagele (NL)
(72) Inventor: CAPELLE, Adriaan, Cornelis, NL-8308 RT Nagele (NL)
(74) Representative: Bartelds, Erik
(86) International application number: PCT/NL2011/050571
(87) International publication number: WO 2012/026810

(56) References cited:
- GB-A- 668 246
- US-A- 5 271 567
- US-A- 5 435 493

## Description

The invention relates to a method for distributed discharge of a medium displaceable by a pump, in particular liquid manure. Such a method is generally known, for instance in GB 668 246, and is for instance applied to spread liquid manure from a manure tank, which can be placed on a chassis and suspended behind a tractor, over agricultural land, so-called "muck spreading".

The oldest known discharge method makes use of an outflow conduit connected to the manure tank and a spreader plate placed some distance therebehind. In this method a jet of manure is sprayed out of the container through the outflow conduit with force against the plate, whereby the manure bursts apart in a curtain or fan and is thus spread over the ground transversely of the direction of travel of the container. As a result of stricter environmental requirements this method of spreading manure is less used nowadays.

In another known method of spreading liquid manure use is made of a cylindrical distributor head which is connected to a feed conduit from the container. A rotating member is usually accommodated in this distributor head, whereby the manure is distributed and possible solids are decreased in size. The distributor head has a number of peripherally distributed outflow openings to which are connected hoses which lead to outlet pipes. These outlet pipes are arranged in a frame extending transversely of the direction of travel behind the manure tank. Distributed in transverse direction, the manure is thus applied to the land in this way.

This known method has the drawback that the distribution of the manure which can be achieved therewith is not optimal. The outlet pipes situated close to the middle of the frame will be supplied with more manure than those on the outer ends. Furthermore, when the feed conduit is opened and closed at the beginning and the end of a field, the feed to the outermost outlet pipes will start later and finish sooner than that to the central pipes, thereby creating a conical discharge pattern. As a result of the presence of a distributor head with rotating distributing member, this method of manure spreading further results in a complex construction of the discharge apparatus to be used therewith.

The invention now has for its object to provide an improved method for distributed discharge of a medium displaceable by a pump, in particular liquid manure. According to the invention this is achieved with a method according to claim 1 and an apparatus according to claim 6.

The medium is preferably sprayed centrally against the distributing member. A uniform distribution to all sides is thus obtained.

When the medium is distributed by the distributing member to form a thin layer and is deflected through more than 90°, a compact cone-shaped spray is obtained which can be easily collected and distributed.

Air is entrained during spraying of the medium, whereby the thin layer of medium is aerated. The unpleasant odour of the manure is thus partly neutralized.

When the sub-flows run to discharge points located a distance from each other, the medium can be distributed over a considerable width.

The number of sub-flows to be drawn off can preferably be adjusted as desired so that the medium can be distributed as required over a larger or smaller width.

The invention also relates to an apparatus with which the above described method can be performed. Such a device for distributed discharge of a medium displaceable by a pump, in particular liquid manure, comprises according to the invention a distributing member, means directed toward the distributing member for spraying the medium and means placed along an edge of the distributing member for drawing off the medium in a number of sub-flows.

The spraying means can here advantageously comprise a spray nozzle placed centrally opposite the distributing member.

The distributing member preferably has a surface facing toward the spraying means which is at least partially concave, whereby the desired degree of deflection can be achieved.

For optimum distribution of the flow of medium in a number of sub-flows the device according to the invention is preferably provided with a number of separating walls protruding from the surface.

The draw-off means advantageously comprise a number of mouthpieces which correspond to the number of sub-flows and which connect to the edge of the distributing member.

In a structurally simple embodiment of the apparatus the mouthpieces are arranged on a ring enclosing the at least partially concave surface of the distributing member. By making use of a ring the apparatus remains open on one side, thereby preventing accumulation therein of solids possibly present in the medium.

When the distributing member is received releasably in the ring, the components of the apparatus can be easily cleaned or replaced. This can be achieved in structurally simple manner by mounting the distributing member in the ring using a bayonet connection.

In order to finally carry the medium to different discharge points the apparatus is preferably provided with a number of discharge conduits which are each connected to one of the mouthpieces.

Finally, the invention relates to an installation for distributed discharge of a medium displaceable by a pump, in particular liquid manure, which is formed by a mobile container arranged on a chassis and at least one discharge apparatus of the above described type connected thereto.

The invention is now elucidated on the basis of a number of embodiments, wherein reference is made to the accompanying drawing in which corresponding components are designated with the same reference numerals, and in which:
Fig. 1 is a schematic perspective view of a part of a discharge installation according to the invention with a manure tank and a single discharge apparatus,
Fig. 2 is a partially transparent perspective bottom view of a first embodiment of the discharge apparatus as used in the installation of fig. 1,
Fig. 3 is a partially transparent side view of the discharge apparatus as according to arrow III in fig. 2,
Fig. 4 is a perspective top view of the discharge apparatus of fig. 2 and 3, wherein the distributing member is omitted,
Fig. 5 is a perspective top view of the distributing member of the discharge apparatus of fig. 2 and 3,
Fig. 6 is a perspective bottom view of an alternative embodiment of the discharge apparatus with a greater number of draw-off points, wherein one of the mouthpieces and the distributing member are omitted,
Fig. 7 is a perspective top view of yet another embodiment of the discharge apparatus with an even greater number of draw-off points,
Fig. 8 is a perspective front view of a discharge installation provided with a number of discharge apparatuses, and
Fig. 9 is a perspective rear view of the part of the discharge installation shown in fig. 8.

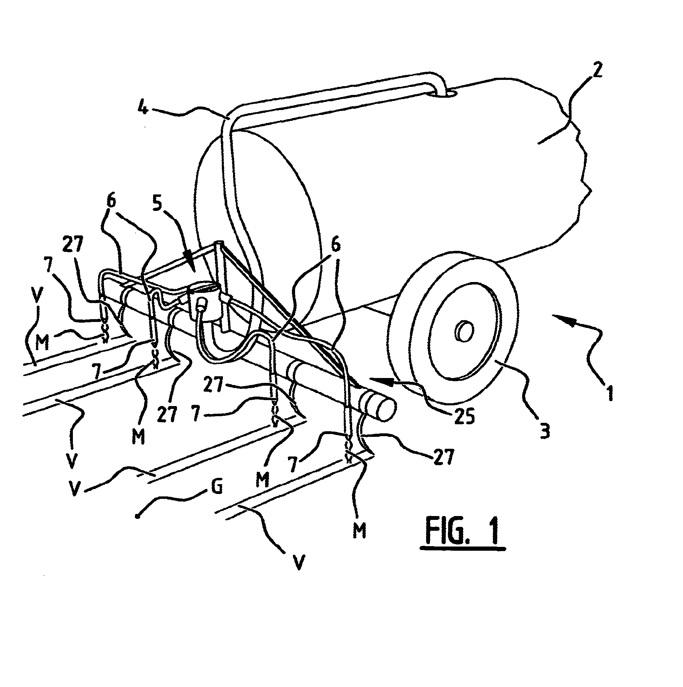

An installation 1 for distributed discharge of a medium displaceable by a pump, in particular liquid manure, comprises a container or manure tank 2 which is filled with this medium and which is arranged on a chassis 3 and can therefore travel over a ground surface G, for instance a field (fig. 1). A feed conduit 4 runs from container 2 to a discharge apparatus 5. Discharge apparatus 5 distributes the flow of medium from feed conduit 4 in a number of sub-flows which are carried via conduits 6 to discharge points 7. Here the medium M thus flows out uniformly distributed over ground surface G. In the shown embodiment the discharge installation 1 is combined with a cultivator 25 (shown highly schematically here). This is formed by a frame 26 suspended from the rear side of the mobile manure tank 2. Attached to this frame 26 are teeth 27 which draw furrows V in the ground. The discharge apparatus 5 with its feed conduit 4 and discharge conduits 6 is mounted on frame 26 of cultivator 25, wherein discharge points 7 are placed behind teeth 27 so that the liquid manure M flows from discharge points 7 into the furrows V.

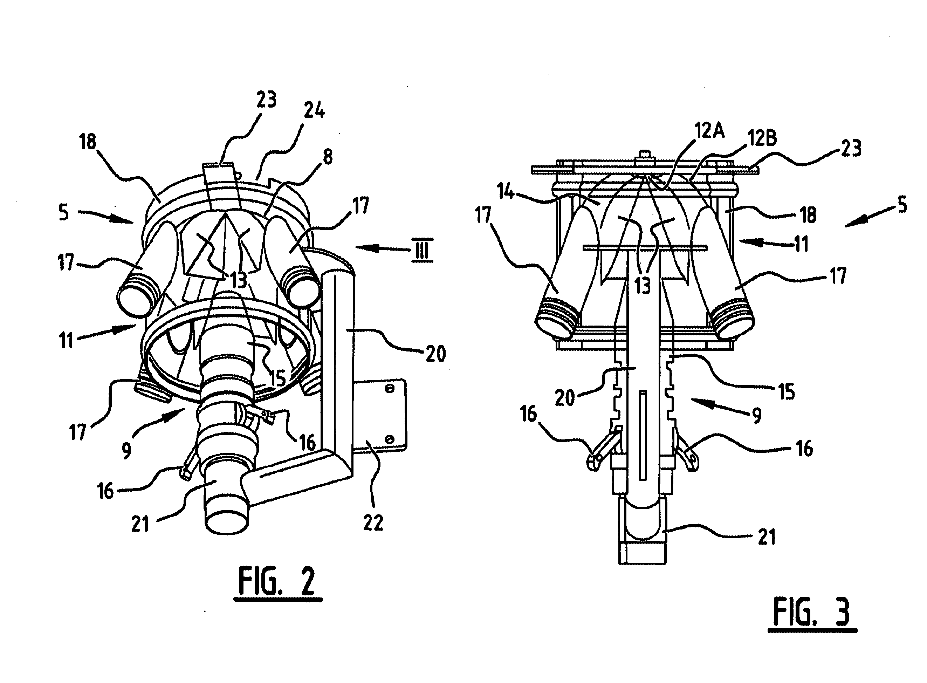

Discharge apparatus 5 comprises a distributing member 8, means 9 facing toward distributing member 8 for spraying the medium M and means 11 placed along an edge 10 of distributing member 8 for drawing off the medium M in sub-flows (fig. 2).

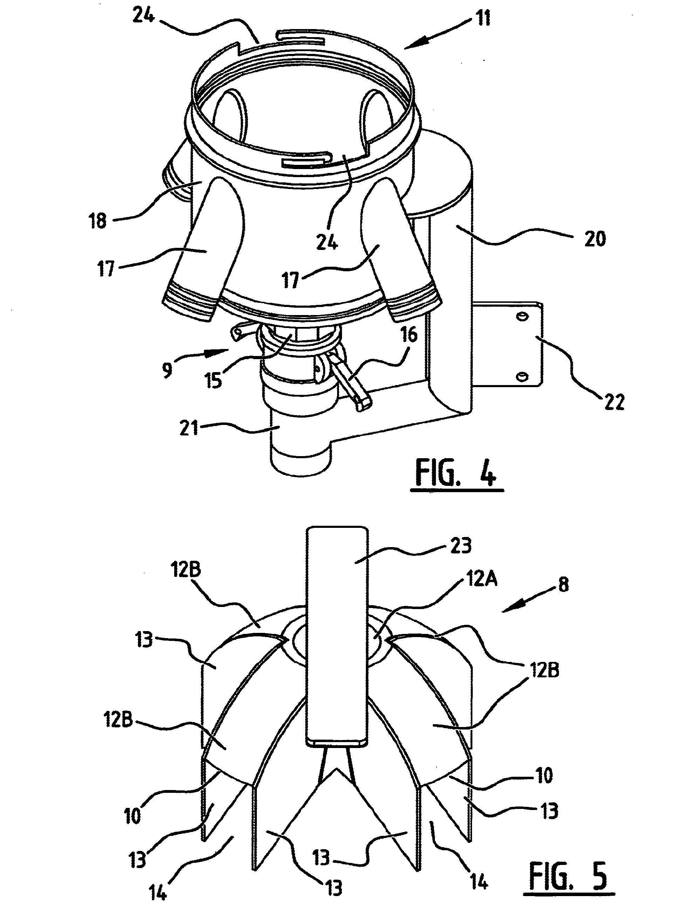

Distributing member 8 has here the cross-sectional form of a dish or umbrella with an inner surface 12 - the surface facing toward spraying means 9 - which has a convex part 12A and a concave part 12B (fig. 3, 5). Protruding from inner surface 12 are a number of separating walls 13 which per pair bound one flow channel 14. In the shown embodiment there are four pairs of separating walls 13, and therefore also four flow channels 14. No operative parts of distributing member 8 are situated between flow channels 14.

In the shown embodiment spraying means 9 comprise a spray nozzle 15 which is attached to feed conduit 4 by means of a rapid-action coupling 16 and placed centrally opposite distributing member 8.

Draw-off means 11 comprise a number of mouthpieces 17. The number of mouthpieces 17 corresponds in normal use to the number of flow channels 14, and so to the number of sub-flows - in this embodiment four. Mouthpieces 17 are arranged on a ring 18 which encloses distributing member 8 and in which four regularly distributed openings 19 are formed. The end of ring 18 located opposite distributing member 8 is not closed but open. Clogging of apparatus 5 is hereby prevented on the one hand and air can thus penetrate on the other.

In the shown embodiment ring 18 is connected via an arm 20 to a sleeve 21 which can be attached to the outer end of feed conduit 4. Spray nozzle 15 is then mounted on this sleeve 21. Arm 2 further bears a plate 22 with which the discharge apparatus 5 can be attached to the surrounding construction of discharge installation 1.

Distributing member 8 is otherwise mounted releasably on ring 18 here. Fixed for this purpose to the upper side of distributing member 8 is a protruding strip 23 which can be received in two substantially L-shaped recesses 24 in ring 18 lying diametrically opposite each other. A bayonet connection is then formed by rotating strip 23. Distributing member 8 can thus be released so that it can be cleaned or optionally replaced with a differently formed distributing member or a distributing member with fewer separating walls.

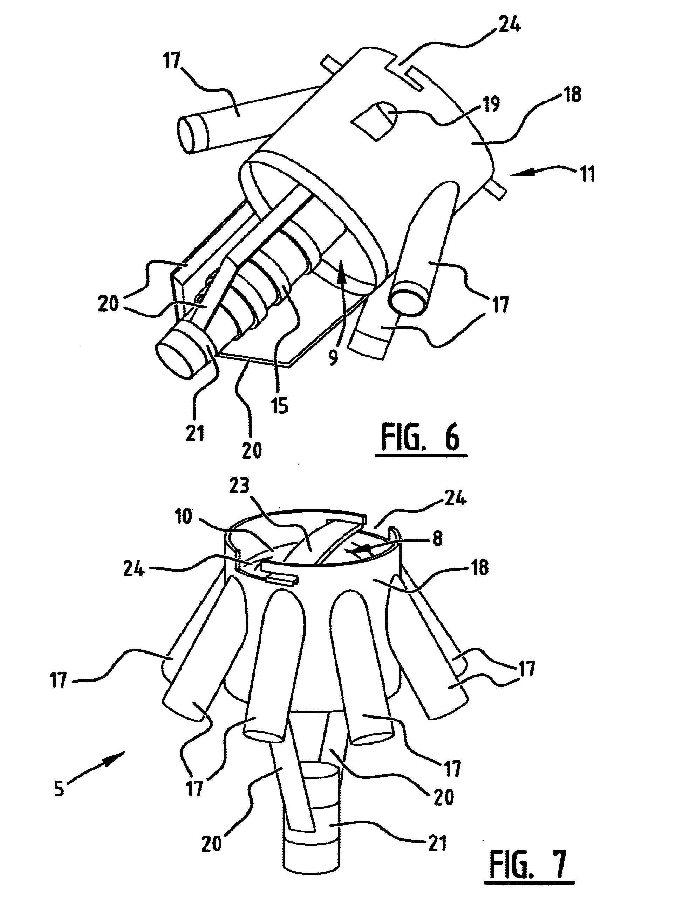

The capacity of discharge apparatus 5 can thus be adjusted. When for instance the distributing member 8 with the four pairs of separating walls 13 as shown in figure 5 are received in ring 18 with eight mouthpieces 17 as shown in figure 7, half of these mouthpieces 17 are deactivated. Half the conduits 6 and discharge points 7 connected thereto are therefore not provided with medium, and less medium M is thus spread over the ground G. A number of different dosages can thus be achieved by combining a single ring 18 with different distributing members 8.

The operation of the discharge apparatus is as follows. After sleeve 21 has been attached to the end of feed conduit 4, the spray nozzle 15 is attached thereto by means of rapid-action coupling 16. Distributing member 8 is then attached to ring 18 by placing and rotating strip 23 in recesses 24. Discharge conduits 6 are attached to mouthpieces 17.

When the feed conduit 4 is now opened, the medium M flows with force out of container 2 and sprays against the central convex part 12A of distributing member 8. Here the medium flow is broken and spread as thin film along the inner surface 12 of distributing member 8. Because spray nozzle 15 is placed at a distance from distributing member 8 and has a suitable tapering form, it also functions as ejector and draws in air along its outer side. The thin layer of medium flowing along the inner surface 12 of distributing member 8 is hereby additionally aerated.

The medium runs into the four flow channels 14 and from there through openings 19 into mouthpieces 17. From these mouthpieces 17 the sub-flows run through conduits 6 to discharge openings 7. Solids and debris possibly present in medium M do not follow the flow of the medium along inner surface 12 of distributing member 8 but drop downward before they reach openings 19. Because discharge apparatus 5 is open on the underside, contaminants do not accumulate but leave the discharge apparatus 5 along spray nozzle 15.

The number of sub-flows does not have to be even. In the shown first alternative embodiment there are five instead of four openings 19 and associated mouthpieces 17 (fig. 6). The associated distributing member (not shown) will therefore also have five pairs of separating walls which define five flow channels. Provided here for a stable attachment of this embodiment of discharge apparatus 5 to feed conduit 4 are three arms 20 which connect ring 18 to sleeve 21. For attachment to the surrounding construction the ring 18 is provided with two protruding shaft stubs 22.

In the third embodiment the discharge apparatus 5 is as stated provided with eight mouthpieces 17 and the flow of medium M is thus separated into eight sub-flows (fig. 7). Two arms 20 suffice here between ring 18 and sleeve 21, while two shaft stubs 22 are once again provided.

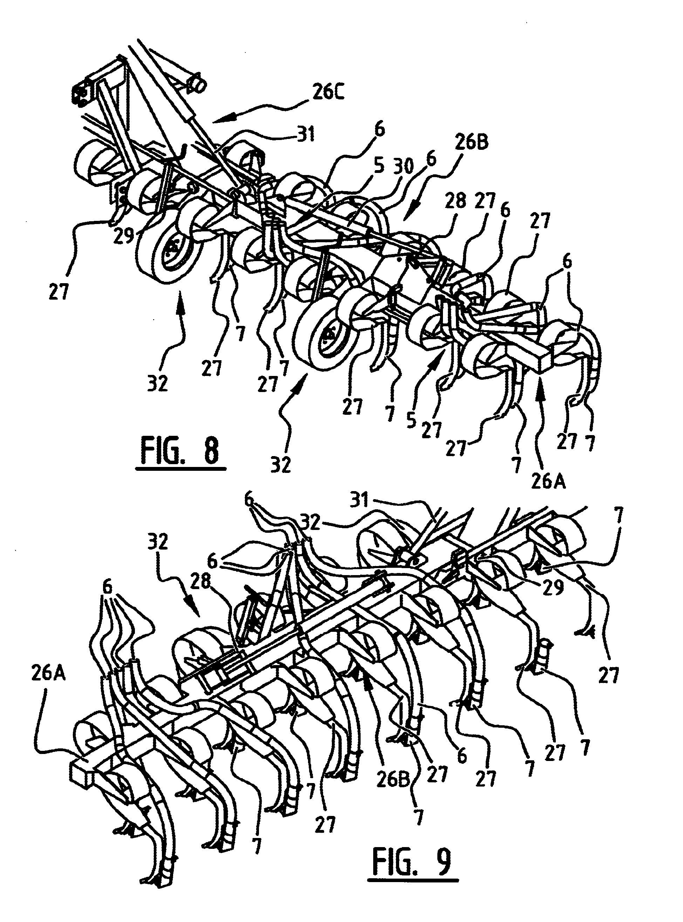

Figures 8 and 9 show a part of a discharge installation 1 provided with five discharge apparatuses 5. For the sake of clarity only conduits 6 and discharge openings 7 of these discharge apparatuses 5 are shown. These discharge apparatuses 5 are each attached to a segment 26A, 26B, 26C of frame 26 of a cultivator 25. The outermost segment 26A is connected here for pivoting about a shaft 28 to the intermediate segment 26B, which is in turn connected for pivoting about a shaft 29 to the central segment 26C. This central segment 26C can be attached to a tractive vehicle, for instance a mobile manure tank. Outer segment 29A and intermediate segment 29B can be folded together by retracting jacks 30, 31 arranged between segments 26A-C.

Each segment 26A-C has a number of teeth 27 mounted alternately on the front side and rear side of frame 26. The central segment 26C further has two wheels 32 and the intermediate segment 29B has a wheel 32 with which the cultivator 25 rests on the ground.

Arranged on each segment 26A-C is a discharge apparatus 5 with a number of conduits 6 and discharge openings 7 corresponding to the number of teeth 27. In the shown embodiment the discharge apparatus on outermost segment 26A is adapted to form five sub-flows, the apparatus on intermediate segment 26B is adapted for six sub-flows and the discharge apparatus on central segment 26C for as many as nine sub-flows of the supplied liquid medium. Three types of discharge apparatus 5 could be used for this purpose, but it is also possible to suffice with one and the same base part on which different distributing members 8 are arranged. The feed of liquid medium to each of the discharge apparatuses 5 can further be individually controlled, whereby segments can be deactivated or reactivated as required.

Using a relatively compact and structurally simple apparatus the invention makes it possible to distribute a flow of medium displaceable by a pump, such as for instance liquid manure, in equal sub-flows. Although the invention has been elucidated above on the basis of a number of embodiments, it will be apparent that these can be varied in many ways. The form of the distributing member can thus be other than shown here, and the draw-off means can also be embodied other than as a ring with mouthpieces. There could also be a different choice of connection between the different components.

The scope of the invention is therefore defined solely by the following claims.

## Claims

1. Method for distributed discharge of a medium (M) displaceable by a pump, in particular liquid manure, by spraying the medium (M) against a distributing member (8) and drawing off the medium (M) flowing along the distributing member (8) at an edge (10) thereof in a number of sub-flows, **characterized in that** the medium (M) is distributed by the distributing member (8) to form a thin layer and is deflected through more than 90°, and **in that** air is entrained during spraying of the medium (M), whereby the thin layer of medium (M) is aerated.

2. Method as claimed in claim 1, **characterized in that** the medium (M) is sprayed centrally against the distributing member (8).

3. Method as claimed in claim 1 or 2, **characterized in that** the sub-flows run to discharge points located a distance from each other.

4. Method as claimed in claim 3, **characterized in that** the number of sub-flows to be drawn off can be adjusted as desired.

5. Method as claimed in claim 3, **characterized in that** the number of sub-flows to be drawn off can be adjusted by replacing the distributing member.

6. Apparatus (5) for distributed discharge of a medium (M) displaceable by a pump, in particular liquid manure, comprising a distributing member (8), means (9) directed toward the distributing member (8) for spraying the medium (M) and means (11) placed along an edge (10) of the distributing member (8) for drawing off the medium (M) in a number of sub-flows, **characterized in that** the distributing member (8) has a surface (12) facing toward the spraying means (9) which is at least partially concave, and **in that** an underside of the discharge apparatus (5) opposite the distributing member (8) is open.

7. Apparatus (5) as claimed in claim 6, **characterized in that** the spraying means (9) comprise a spray nozzle (15) placed centrally opposite the distributing member (8).

8. Apparatus (5) as claimed in claim 7, **characterized in that** the spray nozzle (15) is placed at a distance from the distributing member (8) and has a tapering form.

9. Apparatus (5) as claimed in any of the claims 6-8, **characterized by** a number of separating walls (13) protruding from the surface (12).

10. Apparatus (5) as claimed in any of the claims 6-9, **characterized in that** the draw-off means (11) comprise a number of mouthpieces (17) which correspond to the number of sub-flows and which connect to the edge (10) of the distributing member (8).

11. Apparatus (5) as claimed in any of the claims 6-10, **characterized in that** the mouthpieces (17) are arranged on a ring (18) enclosing the distributing member (8).

12. Apparatus (5) as claimed in claim 11, **characterized in that** the distributing member (8) is received releasably in the ring (18).

13. Apparatus (5) as claimed in claim 12, **characterized in that** the distributing member (8) is mounted in the ring (18) using a bayonet connection.

14. Apparatus (5) as claimed in any of the claims 10-13, **characterized by** a number of discharge conduits (6) which are each connected to one of the mouthpieces (17).

15. Installation (1) for distributed discharge of a medium (M) displaceable by a pump, in particular liquid manure, comprising a mobile container (2) arranged on a chassis (3) and at least one discharge apparatus (5) as claimed in any of the claims 6-14 connected thereto.

## Patentansprüche

1. Verfahren zur verteilten Abgabe eines Mediums (M), das mittels einer Pumpe verlagerbar ist, insbesondere Gülle, durch Sprühen des Mediums (M) gegen ein Verteilungselement (8) und Abziehen des entlang des Verteilungselements (8) strömenden Mediums (M) an einem Rand (10) davon in einer Anzahl an Teilströmen, **dadurch gekennzeichnet, dass** das Medium (M) durch das Verteilungselement (8) derart verteilt wird, dass es eine dünne Schicht bildet und um mehr als 90° abgelenkt wird, und dadurch, dass Luft während eines Sprühens des Mediums (M) mitgerissen wird, wobei die dünne Schicht an Medium (M) mit Luft durchsetzt wird.

2. Verfahren wie in Anspruch 1 beansprucht, **dadurch gekennzeichnet, dass** das Medium (M) zentral gegen das Verteilungselement (8) gesprüht wird.

3. Verfahren wie in Anspruch 1 oder 2 beansprucht, **dadurch gekennzeichnet, dass** die Teilströme zu Abgabepunkten, die voneinander beabstandet liegen, laufen.

4. Verfahren wie in Anspruch 3 beansprucht, **dadurch gekennzeichnet, dass** die Anzahl an Teilströmen, welche abzuziehen sind, wie gewünscht eingestellt werden kann.

5. Verfahren wie in Anspruch 3 beansprucht, **dadurch gekennzeichnet, dass** die Anzahl an Teilströmen, welche abzuziehen sind, durch Ersetzen des Verteilungselements eingestellt werden kann.

6. Vorrichtung (5) zur verteilten Abgabe eines Mediums (M), das mittels einer Pumpe verlagerbar ist, insbesondere Gülle, die ein Verteilungselement (8), Mittel (9), die zu dem Verteilungselement (8) hin gerichtet sind, zum Sprühen des Mediums (M) und Mittel (11), die entlang eines Rands (10) des Verteilungselements (8) angeordnet sind, zum Abziehen des Mediums (M) in einer Anzahl an Teilströmen umfasst, **dadurch gekennzeichnet, dass** das Verteilungselement (8) eine den Sprühmitteln (9) zugewandte Oberfläche (12) aufweist, die zumindest teilweise konkav ist, und dadurch, dass eine Unterseite der Abgabevorrichtung (5), die dem Verteilungselement (8) gegenüber liegt, offen ist.

7. Vorrichtung (5) wie in Anspruch 6 beansprucht, **dadurch gekennzeichnet, dass** die Sprühmittel (9) eine Sprühdüse (15) umfassen, die zentral gegenüber dem Verteilungselement (8) angeordnet ist.

8. Vorrichtung (5) wie in Anspruch 7 beansprucht, **dadurch gekennzeichnet, dass** die Sprühdüse (15) beabstandet von dem Verteilungselement (8) angeordnet ist und eine sich verjüngende Form aufweist.

9. Vorrichtung (5) wie in einem der Ansprüche 6 - 8 beansprucht, **gekennzeichnet durch** eine Anzahl an Trennwänden (13), die sich von der Oberfläche (12) erstrecken.

10. Vorrichtung (5) wie in einem der Ansprüche 6 - 9 beansprucht, **dadurch gekennzeichnet, dass** die Abzugsmittel (11) eine Anzahl an Mundstücken (17) umfassen, die der Anzahl an Teilströmen entsprechen und die sich mit dem Rand (10) des Verteilungselements (8) verbinden.

11. Vorrichtung (5) wie in einem der Ansprüche 6 - 10 beansprucht, **dadurch gekennzeichnet, dass** die Mundstücke (17) auf einem Ring (18), der das Verteilungselement (8) umschließt, angeordnet sind.

12. Vorrichtung (5) wie in Anspruch 11 beansprucht, **dadurch gekennzeichnet, dass** das Verteilungselement (8) lösbar in dem Ring (18) aufgenommen ist.

13. Vorrichtung (5) wie in Anspruch 12 beansprucht, **dadurch gekennzeichnet, dass** das Verteilungselement (8) unter Verwendung einer Bajonettverbindung in dem Ring (18) angebracht ist.

14. Vorrichtung (5) wie in einem der Ansprüche 10 - 13 beansprucht, **gekennzeichnet durch** eine Anzahl an Abgabeleitungen (6), die jeweils mit einem der Mundstücke (17) verbunden sind.

15. Einrichtung (1) zur verteilten Abgabe eines Mediums (M), das mittels einer Pumpe verlagerbar ist, insbesondere Gülle, die einen mobilen Behälter (2), der auf einem Fahrgestell (3) angeordnet ist, und zumindest eine daran angeschlossene Abgabevorrichtung (5) wie in einem der Ansprüche 6 - 14 beansprucht umfasst.

## Revendications

1. Procédé de refoulement distribué d'un fluide (M) pouvant être déplacé par une pompe, en particulier, un engrais liquide, en pulvérisant le fluide (M) contre un élément de distribution (8) et en refoulant le fluide (M) s'écoulant le long de l'élément de distribution (8) au niveau d'un bord (10) de celui-ci en un certain nombre d'écoulements secondaires, **caractérisé en ce que** le fluide (M) est distribué par l'élément de distribution (8) de manière à former une mince couche et est dévié sur plus de 90°, et **en ce que** de l'air est entraîné au cours de la pulvérisation du fluide (M), de telle sorte que la mince couche du fluide (M) est aérée.

2. Procédé selon la revendication 1, **caractérisé en ce que** le fluide (M) est pulvérisé de manière centrale contre l'élément de distribution (8).

3. Procédé selon la revendication 1 ou 2, **caractérisé en ce que** les écoulements secondaires s'écoulent vers des points de refoulement situés à une certaine distance l'un de l'autre.

4. Procédé selon la revendication 3, **caractérisé en ce que** le nombre d'écoulements secondaires à refouler peut être ajusté comme cela est désiré.

5. Procédé selon la revendication 3, **caractérisé en ce que** le nombre d'écoulements secondaires à refouler peut être ajusté en remplaçant l'élément de distribution.

6. Dispositif (5) destiné à assurer le refoulement distribué d'un fluide (M) pouvant être déplacé par une pompe, en particulier, un engrais liquide, comprenant un élément de distribution (8), des moyens (9) orientés vers l'élément de distribution (8) afin de pulvériser le fluide (M) et des moyens (11) placés le long d'un bord (10) de l'élément de distribution (8) afin de refouler le fluide (M) en un certain nombre d'écoulements secondaires, **caractérisé en ce que** l'élément de distribution (8) présente une surface (12) orientée vers le moyen de pulvérisation (9) qui est au moins partiellement concave, et **en ce qu'**une face inférieure du dispositif de refoulement (5) opposée à l'élément de distribution (8) est ouverte.

7. Dispositif (5) selon la revendication 6, **caractérisé en ce que** les moyens de pulvérisation (9) comprennent un orifice de pulvérisation (15) placé de manière centrale à l'opposé de l'élément de distribution (8).

8. Dispositif (5) selon la revendication 7, **caractérisé en ce que** l'orifice de pulvérisation (15) est placé à une certaine distance de l'élément de distribution (8) et présente une forme évasée.

9. Dispositif (5) selon l'une quelconque des revendications 6 à 8, **caractérisé par** un certain nombre de parois de séparation (13) s'étendant à partir de la surface (12).

10. Dispositif (5) selon l'une quelconque des revendications 6 à 9, **caractérisé en ce que** les moyens de refoulement (11) comprennent un certain nombre d'embouchures (17) qui correspondent au nombre d'écoulements secondaires et qui sont raccordées au bord (10) de l'élément de distribution (8).

11. Dispositif (5) selon l'une quelconque des revendications 6 à 10, **caractérisé en ce que** les embouchures (17) sont agencées sur une bague (18) enveloppant l'élément de distribution (8).

12. Dispositif (5) selon la revendication 11, **caractérisé en ce que** l'élément de distribution (8) est reçu de manière amovible sur la bague (18).

13. Dispositif (5) selon la revendication 12, **caractérisé en ce que** l'élément de distribution (8) est monté sur la bague (18) en utilisant un raccord à baïonnette.

14. Dispositif (5) selon l'une quelconque des revendications 10 à 13, **caractérisé par** un certain nombre de conduits de refoulement (6) qui sont chacun raccordés à l'une des embouchures (17).

15. Installation (1) destinée à assurer le refoulement distribué d'un fluide (M) pouvant être déplacé par une pompe, en particulier, un engrais liquide, comprenant un conteneur mobile (2) agencé sur un châssis (3) et au moins un dispositif de refoulement (5) selon l'une quelconque des revendications 6 à 14, raccordé à celui-ci.
